# FASCICULE DE BREVET EUROPEEN

(11) **EP 3 878 689 B1**
(45) Date de publication et mention de la délivrance du brevet: **13.11.2024**
(21) Numéro de dépôt: 21162252.7
(22) Date de dépôt: 12.03.2021
(51) Int. Cl.: B60P 3/22

(54) **ENSEMBLE FONCTIONNEL D'UN HYDROCUREUR COMPORTANT DEUX MODULES FONCTIONNELS ET DEUX FAUX-CHÂSSIS ADAPTABLES A DES CHÂSSIS DIFFÉRENTS DE VÉHICULES PORTEURS**
FUNKTIONSEINHEIT EINES ROHREINIGUNGSGERÄTS AUS ZWEI FUNKTIONSMODULEN UND ZWEI UNTERRAHMEN, DIE AN VERSCHIEDENE FAHRGESTELLE VON TRÄGERFAHRZEUGEN ANGEPASST WERDEN KÖNNEN
FUNCTIONAL ASSEMBLY OF A SEWER CLEANER COMPRISING TWO FUNCTIONAL MODULES AND TWO UNDERFRAMES ADAPTABLE TO DIFFERENT FRAMES OF CARRIER VEHICLES

(30) Priorité: 14.03.2020 FR 2002528
(43) Date de publication de la demande: 15.09.2021
(73) Titulaire: ORTEC EXPANSION, 13799 Aix En Provence Cedex 3 (FR)
(72) Inventeur: RIVARD, Daniel, 75007 Paris (FR)
(74) Mandataire: Gevers & Orès

(56) Documents cités:
- DE-C- 821 176
- DE-U1- 29 901 936
- FR-A1- 3 055 130
- FR-A1- 3 068 656
- US-A- 3 421 646

## Description

### DOMAINE TECHNIQUE

La présente invention concerne un ensemble fonctionnel d'un hydrocureur destiné à être monté sur un véhicule porteur, et un hydrocureur pourvu d'un tel ensemble fonctionnel.

### ÉTAT DE LA TECHNIQUE

Plus particulièrement, bien que non exclusivement, la présente invention s'applique à un hydrocureur industriel. Elle peut également s'appliquer à un hydrocureur d'assainissement qui est destiné, en particulier, à assurer des opérations de curage et de pompage de réseaux d'eaux usées et d'ouvrages d'assainissement.

On sait qu'un hydrocureur industriel est destiné à des travaux de nettoyage d'équipements et d'installations industrielles. On utilise, notamment, un hydrocureur industriel lors des travaux de pompage et de nettoyage sur des sites pétroliers et parapétroliers. Un hydrocureur utilisé dans des complexes pétroliers et parapétroliers a notamment pour fonctions :
- de pomper des produits pétroliers ; et
- d'effectuer divers travaux (de décapage, de débouchage, de remise à niveau de tubes d'échangeurs, de nettoyage d'enceintes ou de bacs, ...) à haute pression.

Pour ce faire, l'hydrocureur comporte un ensemble d'équipements fonctionnels (citerne de collecte, système de pompage, ...) permettant de réaliser les opérations de pompage et de nettoyage. Ces équipements fonctionnels sont montés sur un véhicule porteur tel qu'un camion. Généralement, les équipements fonctionnels de l'hydrocureur présentent une durée de vie importante, par exemple de l'ordre d'une vingtaine d'années, qui est, en général, beaucoup plus élevée que la durée de (bon) fonctionnement sans panne du véhicule porteur, souvent de moins de dix ans.

Aussi, après une dizaine d'années d'exploitation, l'exploitant d'un tel hydrocureur industriel est confronté au dilemme suivant :
- soit garder plus longtemps l'hydrocureur (au-delà de cette durée) avec des coûts de maintenance et/ou de réparation croissants pour le véhicule porteur ainsi que des durées d'immobilisation croissantes notamment pour des opérations de maintenance et/ou de réparation ;
- soit remplacer l'hydrocureur par un hydrocureur neuf pour disposer d'un véhicule porteur neuf, tout en sachant que les équipements fonctionnels sont encore en bon fonctionnement et auraient pu continuer à être utilisés.

Chacune de ces deux solutions est coûteuse, et aucune d'elle n'est réellement satisfaisante.

A cela s'ajoutent des contraintes environnementales. En particulier, les normes sur les rejets des gaz d'échappement des véhicules évoluent très rapidement et de ce fait réduisent la durée de vie des véhicules porteurs ou encore réduisent les endroits où peuvent être exploités les hydrocureurs.

Par ailleurs, on connaît :
- par le document DE 299 01 936 U1, un véhicule pour le transport de matériaux liquides comprenant un ensemble de citernes et un système de pompage, qui sont séparés et montés, de façon amovible, sur un châssis ;
- par le document FR 3 068 656 A1, un dispositif permettant d'adapter un équipement hydrocureur sur un porteur ; et
- par le document FR 3 055 130 A1, une citerne amovible pour un véhicule lourd.

### EXPOSÉ DE L'INVENTION

La présente invention concerne un ensemble fonctionnel d'un hydrocureur destiné à être monté sur un véhicule porteur pourvu d'un châssis, qui a pour objet de remédier aux inconvénients précités, l'ensemble fonctionnel comprenant une pluralité d'équipements fonctionnels.

Selon l'invention, ledit ensemble fonctionnel comporte :
- deux modules fonctionnels intégrant tous lesdits équipements fonctionnels, à savoir un premier module fonctionnel pourvu au moins d'une citerne, et de préférence d'autres éléments décrits ci-dessous, et un second module fonctionnel pourvu au moins d'un système de pompage ; et
- deux faux-châssis, chacun desdits modules fonctionnels étant apte à être fixé sur l'un desdits faux-châssis, chacun desdits faux-châssis étant adaptable à des châssis différents de véhicule porteur et étant adapté au châssis du véhicule porteur sur lequel il est destiné à être monté.

Ainsi, grâce à l'invention, il est possible de conserver les équipements fonctionnels qui sont en bon état de fonctionnement et de remplacer le véhicule porteur, en montant l'ensemble fonctionnel sur un autre véhicule porteur, notamment un véhicule porteur neuf, via les deux faux-châssis qui peuvent être adaptés au nouveau véhicule porteur.

Lors du changement de véhicule porteur ou lors de la première installation sur un véhicule porteur, chacun des deux faux-châssis qui est donc adaptable à différents châssis (et ainsi à différents véhicules porteurs) est réglé ou réalisé pour être adapté au châssis du véhicule porteur utilisé.

L'ensemble fonctionnel présente encore d'autres avantages précisés ci-dessous.

Selon l'invention, chacun desdits faux-châssis est adaptable en largeur.

Avantageusement, chacun desdits faux-châssis comporte des longerons et des traverses, les traverses présentant une longueur adaptée à la largeur du châssis du véhicule porteur. Pour ce faire, dans un mode de réalisation particulier, au moins certaines desdites traverses sont télescopiques, ce qui permet de conserver les mêmes traverses pour modifier la largeur du ou des faux-châssis.

Par ailleurs, de façon avantageuse, au moins certaines desdites traverses sont courbées pour créer un passage sous la courbure, en particulier pour permettre le passage de tuyaux et/ou de câbles de liaison. Cette courbure peut être réalisée vers le haut ou vers le bas.

Avantageusement, chacun des faux-châssis présente un nombre limité de points (ou zones) de fixation, de préférence quatre points de fixation, destinés à sa fixation amovible au châssis du véhicule porteur. Par ce nombre limité de points de fixation, ainsi que par les caractéristiques précisées ci-dessous de ces points de fixation, on est en mesure de réaliser une pose et/ou une dépose facilitées et rapides de l'ensemble fonctionnel sur le châssis du porteur, ce qui permet de réduire la durée d'immobilisation de l'hydrocureur et les coûts de pose et/ou de dépose.

Par ailleurs, avantageusement, le premier module est pourvu, en plus de la citerne (de préférence une citerne de collecte, notamment de produits pompés), d'au moins certains des éléments suivants :
- des cuves à eau ;
- des cuves cycloniques et des pompes ;
- des coffres de rangement ; et
- des accessoires (ou équipements), nécessaires et/ou utiles à la mise en oeuvre de l'hydrocureur, tels qu'un enrouleur haute pression, un enrouleur de pompage et/ou des systèmes de commande et de contrôle.

En outre, de façon avantageuse, le second module comporte un caisson fermé dans lequel est installé, en plus du système de pompage, au moins un système de haute pression et un système de filtrage.

La présente invention concerne également un hydrocureur qui comporte un véhicule porteur pourvu d'un châssis, ainsi qu'un ensemble fonctionnel tel que celui décrit ci-dessus, qui est fixé de façon amovible sur ledit châssis du véhicule porteur.

Avantageusement, chacun des faux-châssis est fixé de façon amovible sur le châssis à des points de fixation, de préférence à quatre points de fixation, chacun des points de fixation comprenant un premier élément de support solidaire du faux-châssis qui est fixé de façon amovible, par exemple à l'aide d'un boulon, sur un second élément de support solidaire du châssis.

Dans un mode de réalisation particulier, le châssis du véhicule porteur présente une largeur variable et, dans ce cas, chacun des faux-châssis est adapté à la largeur de la partie du châssis sur lequel il est fixé.

### BRÈVE DESCRIPTION DES FIGURES

Les figures annexées feront bien comprendre comment l'invention peut être réalisée. Sur ces figures, des références identiques désignent des éléments semblables.
La figure 1 est une vue schématique éclatée d'un mode de réalisation particulier d'un hydrocureur.
La figure 2 est une vue schématique, en perspective, d'une partie de l'hydrocureur de la figure 1.
La figure 3 est une vue en perspective d'un exemple de faux-châssis.
La figure 4 est une vue en perspective d'une traverse du faux-châssis de la figure 3.
La figure 5 est une vue schématique partielle, en coupe transversale, illustrant un premier mode de réalisation d'un point de fixation d'un faux-châssis sur un châssis d'un véhicule porteur.
La figure 6 est une vue latérale, schématique et partielle du premier mode de réalisation de la figure 5.
La figure 7 est une vue partielle, en perspective, d'un élément de support du premier mode de réalisation des figures 5 et 6.
La figure 8 est une vue schématique partielle, en coupe transversale, illustrant un second mode de réalisation d'un point de fixation d'un faux-châssis sur un châssis d'un véhicule porteur.
La figure 9 est une vue latérale, schématique et partielle du second mode de réalisation de la figure 8.
La figure 10 est une vue partielle, en perspective, d'un élément de support du second mode de réalisation des figures 8 et 9.

### DESCRIPTION DÉTAILLÉE

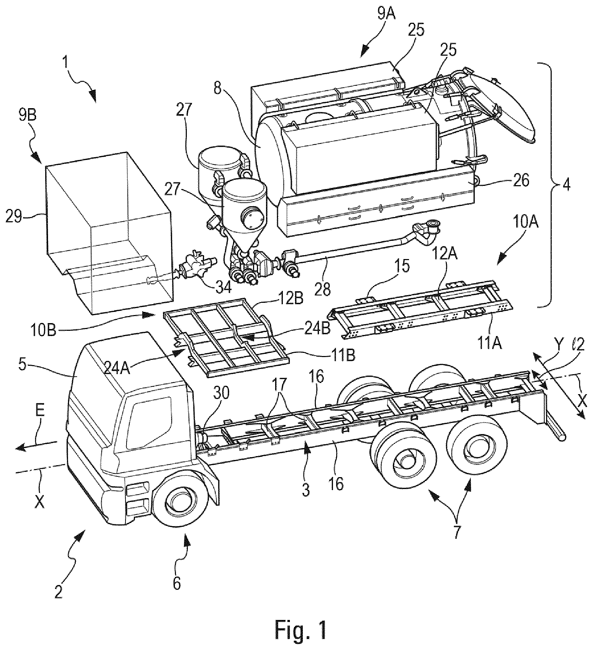

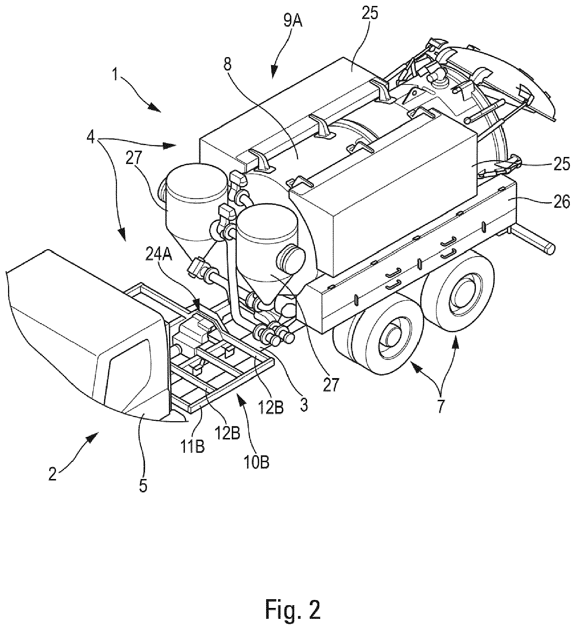

Un hydrocureur 1 illustrant l'invention est représenté dans un mode de réalisation particulier sur les figures 1 et 2.

Dans une application préférée, l'hydrocureur 1 est un hydrocureur industriel qui est destiné à des travaux de nettoyage d'équipements et d'installations industrielles, et notamment à des travaux de pompage et de nettoyage sur des sites pétroliers et parapétroliers.

L'hydrocureur 1 comporte un véhicule porteur 2 pourvu d'un châssis 3 d'axe longitudinal X-X (figure 1), et un ensemble fonctionnel 4 qui est destiné à être fixé (de façon amovible) sur ledit châssis 3 du véhicule porteur 2, comme précisé ci-dessous.

Le véhicule porteur 2 est un camion, à savoir un véhicule terrestre automobile destiné au transport, qui est équipé, de façon usuelle, notamment, d'une cabine 5 (pour un conducteur), d'un essieu directeur 6, d'essieux porteurs 7 et du châssis 3.

L'ensemble fonctionnel 4 comporte, quant à lui, comme représenté sur la figure 1, deux modules fonctionnels 9A et 9B. On entend par module (ou équipement ou ensemble) « fonctionnel » le fait que le module (ou l'équipement ou l'ensemble) comprenne des moyens permettant de mettre en oeuvre des fonctions (ou des tâches ou des opérations) particulières de l'hydrocureur 1, telles qu'un pompage de produits industriels par exemple.

Les modules fonctionnels 9A et 9B intègrent tous les équipements fonctionnels de l'hydrocureur 1. En particulier, le module fonctionnel 9A est notamment pourvu d'une citerne 8 de collecte, par exemple en inox, ainsi que d'autres équipements précisés ci-dessous, et le module fonctionnel 9B est pourvu d'un système de pompage ainsi que d'autres équipements également précisés ci-dessous. Le module fonctionnel 9B comporte un caisson 29 fermé, par exemple en inox, dans lequel sont installés les équipements de ce module fonctionnel 9B, qui ne sont pas représentés sur la figure 1.

L'ensemble fonctionnel 4 comporte également deux faux-châssis 10A et 10B. Le module fonctionnel 9A est configuré pour pouvoir être fixé (de façon amovible) sur le faux-châssis 10A et le module fonctionnel 9B est configuré pour pouvoir être fixé (de façon amovible) sur le faux-châssis 10B.

Chacun des faux-châssis 10A et 10B peut être fixé de façon amovible sur le châssis 3. On entend par « fixé de façon amovible » le fait de pouvoir lier de façon suffisamment solide et stable pour l'utilisation envisagée, par exemple au moyen d'un boulon, ce lien pouvant être ôté pour libérer l'élément lié.

Chacun des faux-châssis 10A et 10B est adaptable à des châssis 3 différents d'un véhicule porteur, c'est-à-dire qu'il peut être modifié, notamment en largeur, pour pouvoir être adapté, c'est-à-dire être installé et fixé sur le châssis particulier d'un véhicule porteur quelconque, de la manière décrite ci-dessous. Dans un mode de réalisation particulier (non représenté), lorsque le châssis du véhicule porteur présente une largeur variable, chacun des deux faux-châssis est adapté à la largeur de la partie du châssis sur lequel il est doit être fixé.

L'ensemble fonctionnel 4 est adapté au châssis 3 du véhicule porteur 2 sur lequel il est destiné à être monté.

Par conséquent, l'ensemble fonctionnel 4 peut être monté sur des véhicules porteurs pourvus de châssis différents, en adaptant, à chaque fois, les deux faux-châssis 10A et 10B au châssis 3 du véhicule porteur 2 utilisé. La seule adaptation nécessaire de l'ensemble fonctionnel 4 concerne donc l'adaptation des faux-châssis 10A et 10B.

Sur la figure 1, on a représenté une flèche E dirigée vers l'avant du véhicule porteur 2 (et donc de l'hydrocureur 1), l'arrière étant dirigé en sens inverse. Le module fonctionnel 9A est agencé via le faux-châssis 10A à l'arrière du châssis 3, et le module fonctionnel 9B est agencé via le faux-châssis 10B à l'avant du châssis 3, devant le module fonctionnel 9B.

Les deux faux-châssis 10A et 10B sont donc montés sur le châssis 3 unique du véhicule porteur 2, le faux-châssis 10A étant agencé vers l'arrière du véhicule porteur 2 et le faux-châssis 10B étant agencé vers l'avant, entre ledit faux-châssis 10A et la cabine 5 du véhicule porteur 2.

L'ensemble fonctionnel 4 peut donc être transposé d'un châssis d'un véhicule porteur à un autre châssis d'un autre véhicule porteur, grâce aux équipements modulaires (à savoir les deux modules fonctionnels 9A et 9B) associés à des pièces intermédiaires (à savoir les deux faux-châssis 10A et 10B) adaptables aux différents châssis.

Ainsi, il est notamment possible de conserver les équipements fonctionnels qui sont encore en bon état de fonctionnement et de remplacer le véhicule porteur 2, en montant l'ensemble fonctionnel 4 sur un autre véhicule porteur, notamment neuf, via les deux faux-châssis 10A et 10B qui peuvent être adaptés au châssis du nouveau véhicule porteur. Le remplacement de véhicule porteur peut également être réalisé pour satisfaire à de nouvelles contraintes réglementaires, et notamment environnementales. L'ensemble fonctionnel 4 et l'hydrocureur 1 présentent d'autres avantages précisés ci-dessous.

Dans un mode de réalisation préféré, chacun des faux-châssis10A et 10B est adaptable en largeur.

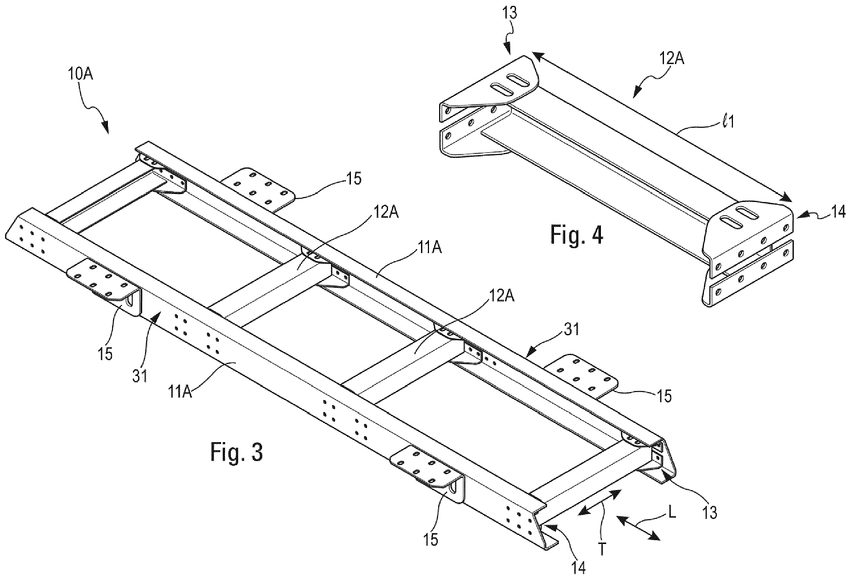

De plus, dans un mode de réalisation préféré, chacun des faux-châssis 10A et 10B comporte deux longerons 11A et 11B et des traverses 12A et 12B fixés à ces longerons 11A et 11B, comme représenté pour le faux-châssis 10A sur la figure 3. Les traverses 12A présentent une longueur l1 (figure 4) adaptée à la largeur l2 (figure 1) du châssis 3 du véhicule porteur 2.

Les traverses 12A, 12B du faux-châssis 10A, 10B, dont un exemple particulier de la traverse 12A est représenté sur la figure 4, sont agencées selon une direction transversale illustrée par une double flèche T sur la figure 3, et les longerons 11A, 11B du faux-châssis 10A, 10B sont agencées selon une direction longitudinale illustrée par un double L.

Le faux-châssis 10A (de la figure 3) est monté sur le châssis 3 avec sa direction longitudinale L parallèle à l'axe longitudinal X-X (figure 1) du châssis 3 et avec sa direction transversale T parallèle à la direction transversale Y (figure 1) du châssis 3.

Pour ce faire, on utilise des traverses 12A de longueur l1 appropriée. Dans une variante de réalisation (non représentée), on peut également utiliser des traverses qui sont télescopiques dans le sens de la longueur 11, ce qui permet d'utiliser les mêmes traverses pour des faux-châssis de largeurs différentes.

Dans l'exemple de la figure 3, les longerons 11A présentent une section transversale en forme de U à faces planes. Les ouvertures des formes en U des deux longerons 11A sont agencées en regard l'une de l'autre et reçoivent respectivement les extrémités 13 et 14 des traverses 12A (figure 4) qui sont fixées, notamment à l'aide de boulons, auxdits longerons 11A. Dans l'exemple de la figure 3, le faux-châssis 10A est pourvu de quatre traverses 12A.

De plus, le faux-châssis 10A comporte quatre équerres de fixation 15 qui sont agencées, de chaque côté, vers l'avant et vers l'arrière. Les équerres de fixation 15 sont fixées, par exemple soudées ou vissées, sur la face externe 31 des longerons 11A en faisant saillie vers l'extérieur. Les équerres de fixation 15 sont destinées à recevoir les modules fonctionnels 9A et 9B qui sont fixés de façon amovible sur ces équerres de fixation 15 à l'aide de moyens coopérant. Dans un mode de réalisation particulier, on prévoit un nombre de points de fixation limité, de préférence quatre points de fixation comme sur l'exemple de la figure 3.

Le châssis 3 du véhicule porteur 2 comporte, quant à lui, de façon usuelle, notamment deux longerons 16 (parallèles à l'axe X-X) et une pluralité de traverses 17 fixées transversalement (suivant la direction Y) à ces deux longerons 16.

Dans un mode de réalisation particulier, pour la fixation de chacun des faux-châssis 10A et 10B sur le châssis 3, on prévoit un nombre limité de points de fixation 32, c'est-à-dire de points (ou de zones) où le faux châssis 10A, 10B est fixé de façon amovible sur le châssis 3. On prévoit de préférence quatre points de fixation 32, à savoir, de chaque côté, un point de fixation vers l'avant et un point de fixation vers l'arrière du faux-châssis considéré.

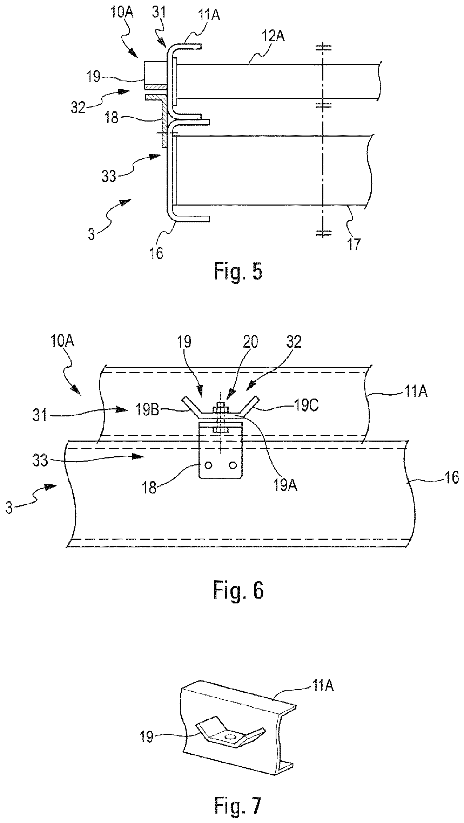

Dans l'exemple de fixation représenté sur les figures 5 à 10, à chaque point (ou zone) de fixation 32, le longeron 16 est pourvu d'un élément de support sur sa face externe 33. Dans l'exemple de ces figures 5 à 10, le longeron 16 présente une forme de U à faces planes dont l'ouverture est orientée vers l'intérieur.

De plus, dans un premier mode de réalisation représenté sur les figures 5 à 7, l'élément de support est une équerre de fixation 18 fixée sur la face externe 33, qui dépasse le longeron 16 du châssis 3 vers le haut, pour pouvoir servir d'appui transversal au longeron 11A du faux-châssis 10A qui repose sur le longeron 16.

Le longeron 11A est également pourvu d'un élément de support 19 qui est fixé sur la face externe 31 dudit longeron 11A. L'élément de support 19 est fixé, de façon amovible, sur l'équerre de fixation 18 par l'intermédiaire d'un boulon 20 (pourvu d'une vis et d'un écrou). L'élément de support 19 comporte une branche centrale 19A et des branches latérales 19B et 19C écartées, comme représenté sur la figure 7.

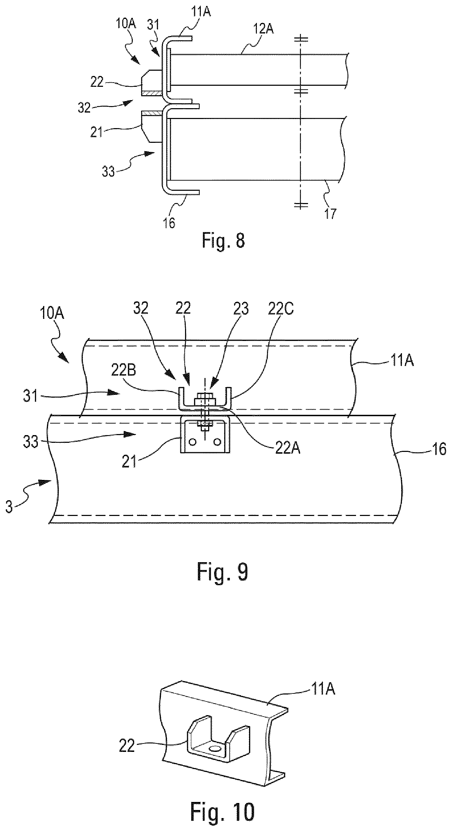

De plus, dans un second mode de réalisation représenté sur les figures 8 à 10, l'élément de support est un élément 21, de type « corbeau », qui arrive à hauteur du longeron 16 du châssis 3. Le longeron 11A du faux-châssis 10A repose sur le longeron 16.

Le longeron 11A est également pourvu d'un élément de support 22, qui est fixé sur la face externe 31 du longeron 11A du faux-châssis 10A. L'élément de support 22 est fixé, de façon amovible, sur l'élément de support 21 par l'intermédiaire d'un boulon 23 (pourvu d'une vis et d'un écrou). L'élément de support 22 comporte une branche centrale 22A et des branches latérales 22B et 22C qui sont parallèles entre elles et orthogonales à la branche centrale 22A, comme représenté sur la figure 10.

Par ailleurs, dans un mode de réalisation particulier, certaines des traverses 12B sont courbées (ou cintrées), pour créer un passage au-dessous ou au-dessus de la traverse, comme représenté sur les figures 1 et 2 pour le faux-châssis 10B.

Une telle courbure qui permet de créer un passage sous la courbure, en particulier pour permettre le passage de tuyaux et/ou de câbles de liaison, peut être réalisée vers le haut ou vers le bas. Cette courbure peut être réalisée vers le haut comme les courbures 24A (figures 1 et 2) ou vers le bas comme la courbure 24B (figure 1) du faux-châssis 10B.

Par ailleurs, dans un mode de réalisation particulier (non représenté), on peut utiliser un véhicule porteur qui comporte un châssis dont la largeur n'est pas constante sur toute la longueur dudit châssis. En particulier, le châssis peut comporter, le long de son axe longitudinal, au moins deux parties liées entre elles et dont chacune présente une largeur constante, différente de la largeur de l'autre partie. A titre d'exemple, le châssis du véhicule porteur peut présenter une largeur à l'avant plus importante qu'à l'arrière, due à des types d'essieux différents, avec par exemple une roue simple à l'essieu à l'avant et des roues jumelées aux essieux à l'arrière. Dans un tel mode de réalisation particulier, chacun des deux faux-châssis est adapté à la largeur de la partie du châssis sur lequel il est doit être fixé. Par conséquent, le fait de disposer de deux faux-châssis et de deux modules fonctionnels permet d'adapter l'ensemble fonctionnel à au moins deux largeurs principales différentes à l'avant et à l'arrière du châssis.

Par ailleurs, le module 9A est pourvu dans le mode de réalisation préféré, représenté sur la figure 1, en plus de la citerne 8 de collecte, des éléments suivants :
- des cuves 25 à eaux, agencées de part et d'autre de la citerne 8 vers le haut de la citerne 8 ;
- des coffres de rangement 26, notamment pour le rangement de tuyaux et d'autres accessoires, agencés de part et d'autre de la citerne 8 vers le bas de la citerne 8 ;
- des cuves 27 cycloniques (et des pompes) pourvues d'une tuyauterie 28 ; et
- divers accessoires (ou équipements), nécessaires et/ou utiles à la mise en oeuvre de l'hydrocureur, tels qu'un enrouleur haute pression, un enrouleur de pompage, des systèmes de commande et de contrôle et/ou des pare-chocs.

Dans une variante de réalisation (non représentée), le module 9A peut être pourvu uniquement d'une partie des éléments précédents et/ou comprendre également d'autres éléments.

En outre, le module 9B est pourvu, à l'intérieur du caisson 29 fermé, d'un moteur hydraulique, de pompes de préférence à haute pression, d'un système de filtrage, ..., ainsi que d'une pompe hydraulique 34. Ce module 9B est lié à une prise de mouvement 30 usuelle du véhicule porteur 2, pour l'entraînement (ou la prise de puissance).

Dans une variante de réalisation (non représentée), le module 9B peut être pourvu uniquement d'une partie des éléments précédents et/ou comprendre également d'autres éléments.

Pour monter (ou poser) un ensemble fonctionnel 4, tel que celui décrit ci-dessus, sur un véhicule porteur 2 dans le but d'obtenir un hydrocureur 1, il suffit globalement de mettre en oeuvre uniquement les opérations principales suivantes :
A1) poser le faux-châssis 10B sur le châssis 3, et le fixer aux points de fixation 32, par exemple à quatre points de fixation 32 ;
A2) poser le faux-châssis 10A sur le châssis 3, et le fixer aux points de fixation 32, par exemple à quatre points de fixation 32 ;
A3) poser le module fonctionnel 9B sur le faux-châssis 10B et le fixer aux points de fixation, par exemple à quatre points de fixation, et également réaliser le branchement à la prise de mouvement 30 et éventuellement d'autres branchements de câbles et/ou de tuyaux ; et
A4) poser le module fonctionnel 9A sur le faux-châssis 10A et le fixer aux points de fixation, par exemple à quatre points de fixation.

Les étapes A1, A2, A3 et A4 peuvent être mises en oeuvre selon plusieurs suites différentes, en prévoyant de monter en premier l'un ou l'autre des faux-châssis 10A et 10B ou l'un ou l'autre des modules fonctionnels 9A et 9B.

Par ailleurs, pour démonter (ou déposer) un ensemble fonctionnel 4, tel que celui décrit ci-dessus, d'un véhicule porteur 2, il suffit par exemple de réaliser les opérations précédentes en sens inverse, à savoir :
B1) enlever les fixations (aux points de fixation) liant le module fonctionnel 9A au faux-châssis 10A, par exemple à quatre points de fixation, et déposer le module fonctionnel 9A du faux-châssis 10A ;
B2) réaliser le débranchement de la prise de mouvement 30, enlever les fixations (aux points de fixation) liant le module fonctionnel 9B au faux-châssis 10B, par exemple à quatre points de fixation, et déposer le module fonctionnel 9B du faux-châssis 10B ;
B3) enlever les fixations (aux points de fixation 32) liant le faux-châssis 10A au châssis 3, par exemple à quatre points de fixation, et déposer le faux-châssis 10A du châssis 3 ; et
B4) enlever les fixations (aux points de fixation 32) liant le faux-châssis 10B au châssis 3, par exemple à quatre points de fixation, et déposer le faux-châssis 10B du châssis 3.

Les étapes B1, B2, B3 et B4 peuvent être mises en oeuvre selon plusieurs suites différentes, en prévoyant de déposer en premier l'un ou l'autre des modules fonctionnels 9A et 9B.

On peut ainsi réaliser une pose et/ou une dépose rapides de l'ensemble fonctionnel 4 par rapport au châssis 3 du véhicule porteur 4, et ceci notamment grâce aux caractéristiques suivantes :
- l'intégration de tous les équipements fonctionnels dans deux modules fonctionnels 9A et 9B ;
- l'utilisation de faux-châssis 10A et 10B adaptables ;
- un nombre limité de points de fixation, d'une part entre les modules fonctionnels 9A et 9B et les faux-châssis 10A et 10B, et d'autre part entre les faux-châssis 10A et 10B et le châssis 3 ; et
- l'utilisation de moyens de fixation rapides tels que des boulons.

On notera que, dans un hydrocureur usuel ne présentant pas les caractéristiques de la présente invention, les équipements sont généralement imbriqués les uns dans les autres et des tuyaux et des câbles de liaison sont également prévus au niveau du châssis, ce qui entraîne que, sans l'utilisation de modules et de faux-châssis comme dans la présente invention, le temps de dépose des équipements d'un tel hydrocureur usuel est beaucoup plus long. Il en est de même du temps de pose. Cela nécessite de modifier l'ensemble du faux-châssis le rendant apte à être monté sur un autre châssis porteur. Une telle opération est longue et coûteuse.

Par ailleurs, bien que cela ne soit pas le but premier de l'invention, il est également envisageable que, pour un nouvel hydrocureur, on garde le véhicule porteur, et on remplace l'ensemble fonctionnel, en montant un nouvel ensemble fonctionnel sur ce véhicule porteur, de la manière décrite ci-dessus. Cette situation peut se présenter, par exemple, en cas de panne ou de défaillance d'un ou de plusieurs équipements de l'ensemble fonctionnel. Cette situation peut également se présenter lorsque l'on souhaite remplacer au moins l'un des modules fonctionnels par un autre module fonctionnel pourvu d'autres équipements ou d'équipements de même type mais présentant des caractéristiques différentes.

L'ensemble fonctionnel 4 et l'hydrocureur 1, tels que décrits ci-dessus, présentent de nombreux avantages. En particulier :
- ils permettent de réaliser et faciliter l'interchangeabilité du porteur par rapport à l'ensemble fonctionnel afin notamment :
   - de réduire le temps d'immobilisation ; et
   - de répondre à des contraintes environnementales actuelles et/ou futures des véhicules porteurs qui évoluent très rapidement, pour remplacer un véhicule porteur ancien (qui ne répond plus à ces contraintes environnementales) par un véhicule porteur nouveau qui répond, quant à lui, à ces contraintes environnementales ; et
- la modularité de l'ensemble fonctionnel 4, avec les deux modules fonctionnels 9A et 9B et les deux faux-châssis 10A et 10B, permet une dépose rapide et un remontage rapide d'un châssis d'un véhicule porteur à un autre châssis d'un autre véhicule porteur ; et
- la modularité des modules fonctionnels 9A et 9B et des faux-châssis 10A et 10B peut permettre une fabrication standardisée de ces éléments.

## Revendications

1. Ensemble fonctionnel d'un hydrocureur destiné à être monté sur un véhicule porteur (2) pourvu d'un châssis (3), l'ensemble fonctionnel (4) comprenant une pluralité d'équipements fonctionnels (8, 25, 26, 27, 34), ledit ensemble fonctionnel (4) comportant deux modules fonctionnels (9A, 9B) comprenant tous lesdits équipements fonctionnels (8, 25, 26, 27, 34), à savoir un premier module fonctionnel (9A) pourvu au moins d'une citerne (8) et un second module fonctionnel (9B) pourvu au moins d'un système de pompage,
**caractérisé en ce qu'**il comporte deux faux-châssis (10A, 10B), chacun desdits modules fonctionnels (9A, 9B) étant apte à être fixé sur l'un desdits faux-châssis (10A, 10B), et **en ce que** chacun desdits faux-châssis (10A, 10B) est adaptable en largeur à des châssis différents de véhicule porteur et est adapté au châssis (3) du véhicule porteur (2) sur lequel il est destiné à être monté.

2. Ensemble fonctionnel selon la revendication 1,
**caractérisé en ce que** chacun desdits faux-châssis (10A, 10B) comporte des longerons (11A, 11B) et des traverses (12A, 12B), les traverses (12A, 12B) présentant une longueur adaptée à la largeur du châssis (3) du véhicule porteur (2).

3. Ensemble fonctionnel selon la revendication 2,
**caractérisé en ce qu'**au moins certaines desdites traverses sont télescopiques.

4. Ensemble fonctionnel selon l'une des revendications 2 et 3,
**caractérisé en ce qu'**au moins certaines desdites traverses sont courbées pour créer un passage sous la courbure (24A, 24B).

5. Ensemble fonctionnel selon l'une quelconque des revendications précédentes,
**caractérisé en ce que** chacun des faux-châssis (10A, 10B) présente quatre points de fixation (32) destinés à sa fixation amovible au châssis (3).

6. Ensemble fonctionnel selon l'une quelconque des revendications précédentes,
**caractérisé en ce que** le premier module fonctionnel (9A) est pourvu, en plus de la citerne (8), d'au moins certains des éléments suivants :
- des cuves à eau (25) ;
- de coffres de rangement (26) ;
- des cuves cycloniques (27) ; et
- divers équipements.

7. Ensemble fonctionnel selon l'une quelconque des revendications précédentes,
**caractérisé en ce que** le second module fonctionnel (9B) comporte un caisson (29) fermé dans lequel est installé, en plus du système de pompage, au moins un système de haute pression et un système de filtrage.

8. Hydrocureur,
**caractérisé en ce qu'**il comporte un véhicule porteur (2) pourvu d'un châssis (3), ainsi qu'un ensemble fonctionnel (4) selon l'une quelconque des revendications 1 à 8, qui est fixé de façon amovible sur ledit châssis (3) du véhicule porteur (2).

9. Hydrocureur selon la revendication 8,
**caractérisé en ce que** chacun des faux-châssis (10A, 10B) est fixé de façon amovible sur le châssis (3) à des points de fixation (32), chacun des points de fixation (32) comprenant un premier élément de support (19, 22) solidaire du faux-châssis (10A, 10B) qui est fixé de façon amovible sur un second élément de support (18, 21) solidaire du châssis (3).

10. Hydrocureur selon l'une des revendications 8 et 9,
**caractérisé en ce que** le châssis (3) du véhicule porteur (2) présente une largeur variable et **en ce que** chacun des faux-châssis (10A, 10B) est adapté à la largeur de la partie du châssis (3) sur lequel il est fixé.

## Patentansprüche

1. Funktionelle Anordnung eines Saugwagens, die auf ein mit einem Fahrgestell (3) versehenen Trägerfahrzeug (2) montiert werden soll, wobei die funktionelle Anordnung (4) eine Vielzahl von funktionellen Einrichtungen (8, 25, 26, 27, 34) umfasst, wobei die funktionelle Anordnung (4) zwei funktionelle Module (9A, 9B) umfasst, die alle die funktionellen Einrichtungen (8, 25, 26, 27, 34) umfassen, nämlich ein erstes funktionelles Modul (9A), das mit mindestens einer Zisterne (8) versehen ist, und ein zweites funktionelles Modul (9B), das mit mindestens einem Pumpsystem versehen ist,
**dadurch gekennzeichnet, dass** sie zwei Hilfsrahmen (10A, 10B) umfasst, wobei jedes der funktionellen Module (9A, 9B) in der Lage ist, auf einem der Hilfsrahmen (10A, 10B) befestigt zu werden, und dadurch, dass jeder der Hilfsrahmen (10A, 10B) in der Breite an unterschiedlichen Fahrgestellen des Trägerfahrzeugs anpassbar ist und an das Fahrgestell (3) des Trägerfahrzeugs (2) angepasst ist, auf dem er montiert werden soll.

2. Funktionelle Anordnung nach Anspruch 1,
**dadurch gekennzeichnet, dass** jeder der Hilfsrahmen (10A, 10B) Längsbalken (11A, 11B) und Querträger (12A, 12B) umfasst, wobei die Querträger (12A, 12B) eine an die Breite des Fahrgestells (3) des Trägerfahrzeugs (2) angepasste Länge aufweisen.

3. Funktionelle Anordnung nach Anspruch 2,
**dadurch gekennzeichnet, dass** mindestens bestimmte der Querträger teleskopisch sind.

4. Funktionelle Anordnung nach einem der Ansprüche 2 und 3,
**dadurch gekennzeichnet, dass** mindestens bestimmte der Querträger gekrümmt sind, um einen Durchgang unter der Krümmung (24A, 24B) zu erzeugen.

5. Funktionelle Anordnung nach einem der vorstehenden Ansprüche,
**dadurch gekennzeichnet, dass** jeder der Hilfsrahmen (10A, 10B) vier Befestigungspunkte (32) aufweist, die zu seiner ablösbaren Befestigung am Fahrgestell (3) bestimmt sind.

6. Funktionelle Anordnung nach einem der vorstehenden Ansprüche,
**dadurch gekennzeichnet, dass** das erste funktionelle Modul (9A) zusätzlich zu der Zisterne (8) mit mindestens bestimmten der folgenden Elemente versehen ist:
- Wasserbehälter (25);
- Aufbewahrungsboxen (26);
- Zyklonbehälter (27); und
- diverse Einrichtungen.

7. Funktionelle Anordnung nach einem der vorstehenden Ansprüche,
**dadurch gekennzeichnet, dass** das zweite funktionelle Modul (9B) eine geschlossene Kammer (29) umfasst, in der zusätzlich zu dem Pumpsystem mindestens ein Hochdrucksystem und ein Filtersystem installiert ist.

8. Saugwagen,
**dadurch gekennzeichnet, dass** er ein mit einem Fahrgestell (3) versehenes Trägerfahrzeug (2) sowie eine funktionelle Anordnung (4) nach einem der Ansprüche 1 bis 7 umfasst, die auf ablösbare Weise auf dem Fahrgestell (3) des Trägerfahrzeugs (2) befestigt ist.

9. Saugwagen nach Anspruch 8,
**dadurch gekennzeichnet, dass** jeder der Hilfsrahmen (10A, 10B) auf ablösbare Weise an Befestigungspunkten (32) an dem Fahrgestell (3) befestigt ist, wobei jeder der Befestigungspunkte (32) ein erstes Trägerelement (19, 22) umfasst, das mit dem Hilfsrahmen (10A, 10B) einstückig ist, das auf ablösbare Weise an einem zweiten Trägerelement (18, 21) befestigt ist, das mit dem Fahrgestell (3) einstückig ist.

10. Saugwagen nach einem der Ansprüche 8 und 9,
**dadurch gekennzeichnet, dass** das Fahrgestell (3) des Trägerfahrzeugs (2) eine variable Breite aufweist, und dadurch, dass jeder der Hilfsrahmen (10A, 10B) an die Breite des Teils des Fahrgestells (3) angepasst ist, an dem er befestigt ist.

## Claims

1. Operational assembly of a hydrocleaner intended to be mounted on a carrier vehicle (2) provided with a frame (3), the operational assembly (4) comprising a plurality of items of operational equipment (8, 25, 26, 27, 34), said operational assembly (4) comprising two operational modules (9A, 9B) both comprising said operational equipment (8, 25, 26, 27, 34), namely a first operational module (9A) provided with at least one tank (8) and a second operational module (9B) provided with at least one pumping system,
**characterized in that** it comprises two subframes (10A, 10B), each of said operational modules (9A, 9B) being capable of being fixed on one of said subframes (10A, 10B), and **in that** each of said subframes (10A, 10B) is adaptable by width to different carrier vehicle frames and is adapted to the frame (3) of the carrier vehicle (2) on which it is intended to be mounted.

2. Operational assembly according to claim 1,
**characterized in that** each of said subframes (10A, 10B) comprises longitudinal members (11A, 11B) and crossmembers (12A, 12B), the crossmembers (12A, 12B) having a length adapted to the width of the frame (3) of the carrier vehicle (2).

3. Operational assembly according to claim 2,
**characterized in that** at least some of said crossmembers are telescopic.

4. Operational assembly according to claim 2 or claim 3,
**characterized in that** at least some of said crossmembers are curved to create a passage under the curve (24A, 24B).

5. Operational assembly according to anyone of the preceding claims, **characterized in that** each of the subframes (10A, 10B) has four fixing points (32) intended for its removable fixing to the frame (3).

6. Operational assembly according to anyone of the preceding claims, **characterized in that** the first operational module (9A) is provided, in addition to the tank (8), with at least some of the following elements:
- water tanks (25);
- storage boxes (26);
- cyclonic tanks (27); and
- various equipment.

7. Operational assembly according to anyone of the preceding claims, **characterized in that** the second operational module (9B) comprises a closed box (29), wherein is installed, in addition to the pumping system, at least one high-pressure system and one filtering system.

8. Hydrocleaner,
**characterized in that** it comprises a carrier vehicle (2) provided with a frame (3), as well as an operational assembly (4) according to anyone of claims 1 to 8, which is removably fixed on said frame (3) of the carrier vehicle (2).

9. Hydrocleaner according to claim 8,
**characterized in that** each of the subframes (10A, 10B) is removably fixed on the frame (3) at fixing points (32), each of the fixing points (32) comprising a first support element (19, 22) integral with the subframe (10A, 10B) which is removably fixed on a second support element (18, 21) integral with the frame (3).

10. Hydrocleaner according to claim 8 or claim 9,
**characterized in that** the frame (3) of the carrier vehicle (2) has a variable width and **in that** each of the subframes (10A, 10B) is adapted to the width of the portion of the frame (3) on which it is fixed.
